# FASCICULE DE BREVET EUROPEEN

(11) **EP 0 627 803 B1**
(45) Date de publication et mention de la délivrance du brevet: **03.09.1997**
(21) Numéro de dépôt: 94401222.8
(22) Date de dépôt: 02.06.1994
(51) Int. Cl.: H02J 13/00

(54) **Procédé et dispositif de gestion centralisée des commutations d'une installation électrique**
Verfahren und zentralisierte Schaltungsverwaltungsvorrichtung für elektrische Installationen
Method and centralized switching management device for electrical installation

(30) Priorité: 02.06.1993 FR 9306587
(43) Date de publication de la demande: 07.12.1994
(73) Titulaire: Girard, François Marie, F-21000 Dijon (FR)
(72) Inventeur: Girard, François Marie, F-21000 Dijon (FR)
(74) Mandataire: Bruder, Michel

(56) Documents cités:
- US-A- 4 612 619
- US-A- 5 168 170

## Description

La présente invention concerne un procédé et un dispositif de régulation à gestion centralisée d'une installation électrique, notamment pour maison individuelle.

Il est connu des documents US-A-5 168 170 et US-A-4 612 619 des procédés et dispositifs de régulation à gestion centralisée d'une installation électrique.

La régulation électrique d'une installation, et notamment d'une installation de chauffage, est habituellement réalisée à l'aide de moyens faisant varier le rapport cyclique de l'alimentation en courant de l'appareil, c'est-à-dire le rapport a=t/T du temps t pendant lequel l'appareil est alimenté (qui constitue une grandeur variable et réglable) sur la période T du courant d'alimentation (qui constitue une grandeur fixe déterminée).

On comprend que plus la valeur de la période T est petite plus la température du corps de chauffe sera constante, en raison de l'importance de l'inertie thermique du corps de chauffe par rapport à la durée de la période T. Tel est le cas par exemple lorsque l'on utilise la période de dix millisecondes de la demi-sinusoïde du courant alternatif du réseau. Les dispositifs de ce type présentent cependant l'inconvénient de générer des parasites radioélectriques importants, dus à la montée en courant rapide exigée, cet inconvénient étant encore aggravé par le nombre important de commutations réalisées.

Dans les dispositifs mettant en jeu de faibles puissances électriques, tels que par exemple les éclairages utilisant des lampes à halogène, on élimine ces parasites radioélectriques au moyen de filtres. Dans les dispositifs mettant en jeu de fortes puissances électriques, tels que les appareils de chauffage, il n'est pas possible, pour des raisons essentiellement économiques, de réaliser un tel filtrage en raison de l'importance des filtres qui seraient alors nécessaires.

C'est pourquoi on préfère utiliser dans ce cas une méthode à trains d'impulsions entières, dans laquelle on fixe la période T à une valeur de l'ordre de plusieurs dizaines de secondes et dans laquelle on réalise la commutation lorsque la sinusoïde représentant la tension passe par le zéro, ce qui évite ainsi de créer des parasites.

Cette méthode présente l'inconvénient de donner naissance à des variations de tension qui produisent sur les appareils d'éclairage à incandescence un effet de scintillement, ou "flicker", perceptible par l'utilisateur et qui est très gênant pour celui-ci.

Afin d'éviter ce type d'inconvénient une norme a été créée qui définit la puissance commutée maximale acceptable en fonction du nombre de commutations réalisées pendant une période de temps déterminée.

Une telle norme ne permet malheureusement pas de résoudre la totalité des problèmes liés à la commutation des récepteurs de puissance. En effet celle-ci a été établie à partir d'un réseau type moyen qui, bien que constitué à partir d'un grand nombre de sites représentatifs, n'en pénalise pas moins à la fois les utilisateurs qui se trouvent en tête de ligne, c'est-à-dire ceux qui sont situés près d'un transformateur, et ceux qui sont situés en bout de ligne, c'est-à-dire ceux qui sont les plus éloignés du transformateur.

En effet les utilisateurs proches du transformateur, où les chutes de tension sont faibles, pourraient réaliser un plus grand nombre de commutations que le nombre limite imposé par la norme, sans représenter en quoi que ce soit une gêne pour les utilisateurs puisque la chute de tension y est faible et que l'effet "flicker" n'est pas perceptible. Les utilisateurs les plus éloignés de ce transformateur, bien qu'utilisant des appareils respectant la norme mentionnée, subissent, quant à eux, des chutes de tension gênantes du fait de la longueur importante de la ligne.

Par ailleurs, la limite maximale fixée par la norme s'applique à un seul appareil, si bien que la mise en service simultanée de plusieurs appareils, et notamment des appareils de puissance tels que des radiateurs, qui disposent de leur propre système de régulation, a pour effet de multiplier les commutations, de sorte que l'on recrée au niveau de l'ensemble des radiateurs un déséquilibre que l'on avait éliminé au niveau individuel.

La présente invention a pour but de remédier à ces inconvénients en proposant un procédé et un dispositif de gestion centralisée de toutes les commutations de puissance, et notamment de chauffage électrique, permettant de minimiser le nombre et/ou l'amplitude des chutes de tension.

La présente invention a ainsi pour objet un procédé de gestion centralisée des commutations électriques d'une installation, caractérisé en ce qu'il comporte les étapes consistant à détecter et mesurer les variations relatives de tension aux bornes de l'installation, provoquées par la mise en fonctionnement ou l'arrêt d'un appareil de celle-ci, à réaliser un comptage des commutations provoquant les différentes variations de tension et à stocker le résultat de ce comptage dans un compteur accumulateur, à comparer le résultat du comptage avec des valeurs préenregistrées établissant le nombre de commutations en fonction de la chute de tension aux bornes de l'installation, à déterminer si on se trouve dans une zone de commutation autorisée, de façon à refuser une commutation non prioritaire si le nombre de commutations réalisées est égal ou supérieur au nombre de commutations admissibles et à autoriser cette commutation dans le cas inverse.

Dans un mode de mise en oeuvre intéressant de l'invention on réalise une pondération des commutations, qui est fonction de l'importance de la variation relative mesurée de la tension, cette valeur pondérée étant stockée dans le compteur accumulateur.

La présente invention a également pour objet un dispositif de gestion centralisée des commutations électriques d'une installation, caractérisé en ce qu'il comporte des moyens de détection et de mesure des variations relatives de tension aux bornes de l'installation provoquées par la mise en fonctionnement ou l'arrêt d'un appareil de celle-ci, des moyens de comptage et de stockage du nombre de commutations réalisées par l'installation, dans un compteur accumulateur, des moyens de stockage du nombre maximal souhaité des commutations réalisées dans l'installation en fonction des dites variations de tension, des moyens de comparaison qui comparent le nombre des commutations réalisées à celui des commutations admissibles pendant ladite période donnée, de façon à refuser une commutation non prioritaire si le nombre de commutations réalisées est égal ou supérieur au nombre de commutations admissibles et autoriser cette commutation dans le cas inverse.

Un exemple de mise en oeuvre non limitatif de l'invention sera décrit ci-après en regard au dessin annexé sur lequel :

La figure 1 est une représentation schématique d'un mode de mise en oeuvre de l'invention.

La figure 2 est une courbe représentant, en fonction de la variation relative de tension d'une installation, le nombre maximal de commutations autorisées dans cette installation pendant une période donnée.

La figure 3 est une représentation schématique d'un dispositif de gestion centralisée des commutations suivant l'invention.

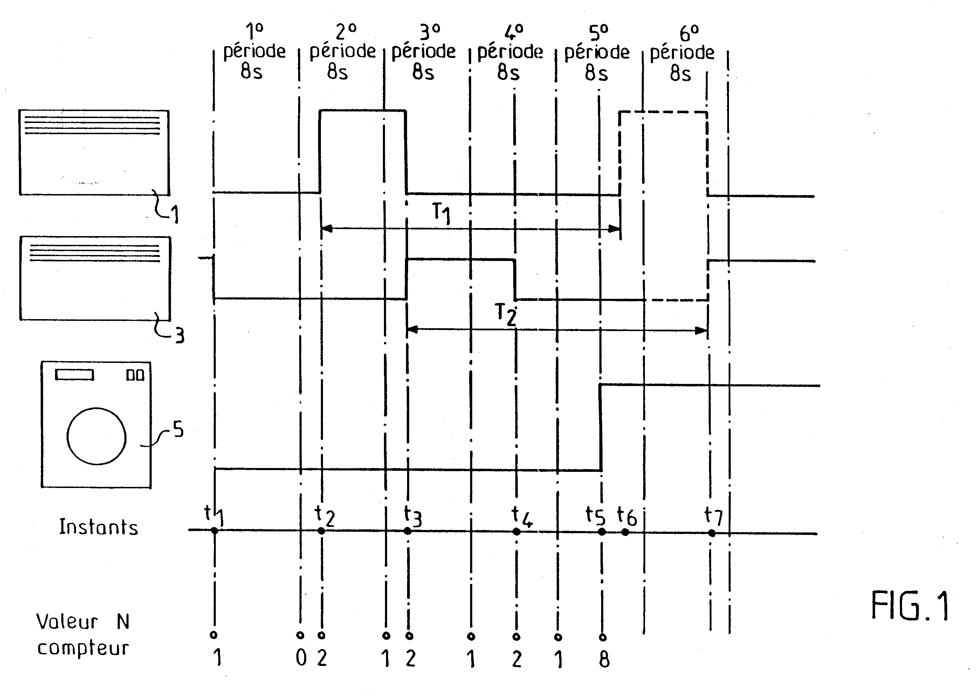

On a ainsi représenté sur la figure 1 une installation simplifiée destinée à illustrer la mise en oeuvre du procédé et du dispositif suivant l'invention, qui est constituée de deux radiateurs 1,3 et d'une machine à laver 5. Les puissances du radiateur 1 et de la machine à laver 5 sont respectivement deux fois et sept fois plus importantes que celle du radiateur 3. Bien entendu, dans la réalité, l'installation pourra être considérablement plus complexe et comprendre de nombreux appareils, mais le fonctionnement de l'invention restera dans son principe rigoureusement identique à celui exposé ci-après.

Certains des appareils utilisés sont équipés d'un thermostat ou sont régis par une centrale de régulation (comme c'est le cas pour les radiateurs 1 et 3), qui ont des périodes respectives T1 et T2. Certains des appareils utilisés sont considérés comme non prioritaires puisque leur mise en marche peut être différée sans conséquences pour la gestion thermique de l'installation. D'autres appareils, tels que la machine à laver 5, une fois commutés sur leur fonction chauffage pourront ne pas avoir de période de chauffage propre, leur fonctionnement étant commandé par un programmateur de l'appareil. Comme exposé ci-après ces appareils seront uniquement pris en compte dans le bilan global du nombre des commutations.

La figure 1 représente, entre deux instants donnés, à savoir les instants t₁ et t₇, les variations de tension provoquées aux bornes du réseau, par la mise en fonctionnement des radiateurs 1 et 3 et de la machine à laver 5.

La caractéristique essentielle de l'invention consiste à détecter toute augmentation et toute baisse de la tension qui se manifeste aux bornes de l'installation par suite d'une mise sous tension ou d'un arrêt d'un appareil de celle-ci, c'est-à-dire d'une commutation. Le nombre de ces commutations sera tenu à jour dans un compteur, appelé ci-après "compteur accumulateur". Cependant, chaque variation de tension n'aura pas le même effet de gêne sur l'utilisateur suivant qu'elle est faible ou importante et, pour tenir compte de ce paramètre, on affectera chacune de ces variations d'un poids déterminé.

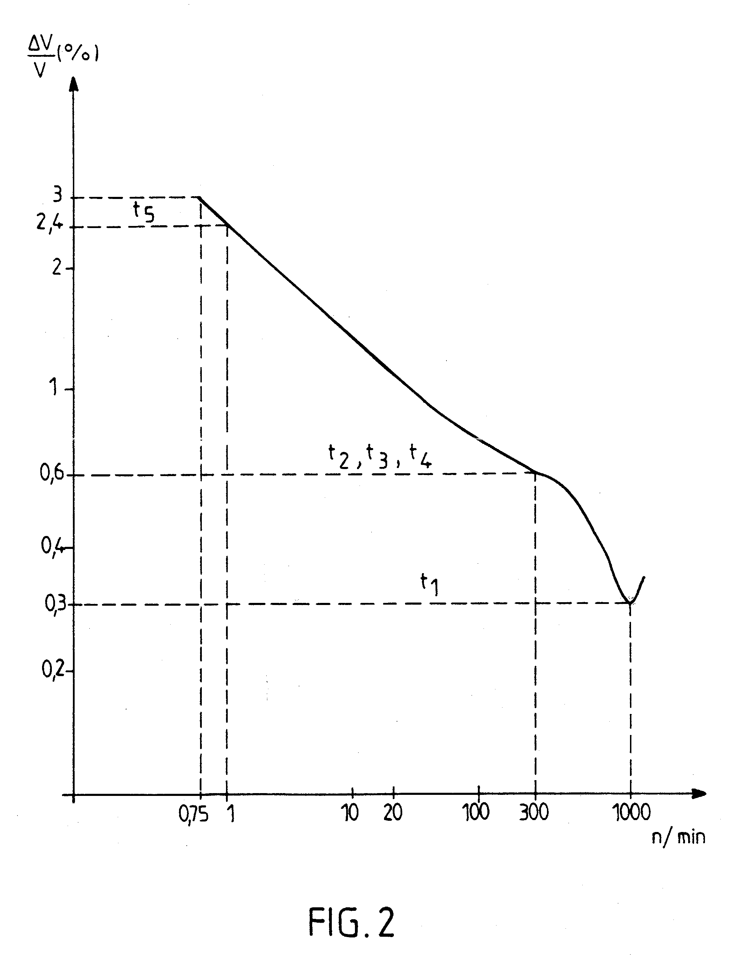

On a représenté sur la figure 2 une courbe en coordonnées logarithmiques, dite courbe de gêne, qui représente, pour une variation relative de tension (exprimée en %), le nombre de commutations maximales qui sont admissibles par minute sans provoquer une gêne de l'entourage.

Cette courbe montre que, pour une chute de tension de 3% on ne pourra effectuer que 0,75 commutation par minute. Autrement dit on ne pourra réaliser une ou plusieurs commutations faisant chuter la tension de 3% que toutes les 80 secondes (60/0,75=80s). Bien entendu la présente invention permettrait d'asservir une installation à tout autre type de courbe de gêne, ou à tout autre type de courbe souhaité par l'utilisateur.

Suivant l'invention on réalise donc un échantillonnage en divisant, par un nombre n donné, par exemple 10, les 3% de chute relative maximale de tension de la courbe de gêne, ce qui donne des pas de mesure de 0,3% et des périodes d'autorisation de huit secondes. Ainsi, à chaque fois que l'on provoquera une variation de tension aux bornes de l'installation, en connectant une charge de celle-ci (chute de tension), ou en la supprimant, (hausse de tension), on incrémentera le compteur accumulateur d'une valeur de 1. Ce même compteur sera automatiquement décrémenté d'une valeur de 1 à la fin de chaque période de huit secondes. Les différentes périodes de huit secondes sont schématisées sur la figure 1 par des traits mixtes verticaux. Bien entendu l'échantillonnage effectué suivant l'invention n'est pas limité à une division linéaire, mais on pourra mettre en oeuvre tout autre type d'opérateurs ou de lois mathématiques.

Ainsi sur la figure 1, au temps t₁ le radiateur 3 vient à être coupé créant ainsi une variation de charge se traduisant aux bornes de l'installation par une élévation de tension ΔV/V de 0,3%, si bien qu'on lui donne le poids 1 et que l'on entre donc dans le compteur accumulateur la valeur 1. A la fin de la première période de huit secondes, ainsi d'ailleurs qu'à la fin des autres périodes de huit secondes ultérieures, on contrôle si le nombre de commutations effectuées est bien inférieur à la valeur maximale définie par la courbe de gêne de la figure 2, compte tenu de la variation de tension produite pendant cette période de huit secondes. Cette variation de tension ΔV/V est constituée par le produit de la valeur N contenue dans le compteur accumulateur par 0,3.%. Dans le cas présent la variation de tension ΔV/V est égale à 1 X 0,3% = 0,3%. La courbe de gêne de la figure 2 indique que, pour une telle variation relative de tension, il est possible d'effectuer 1000 commutations par minute, alors qu'une seule commutation a été effectuée.

Au temps t₂, soit dix secondes plus tard, c'est le radiateur 1 qui est alimenté en courant. Ce radiateur, qui est de puissance double de celle du radiateur 3, crée une variation de charge se traduisant, aux bornes de l'installation, par une variation de tension double de la précédente, à savoir 0,6%, si bien qu'on lui donne le poids 2 et que l'on ajoute au compteur accumulateur la valeur 2. Cependant, on a décrémenté le compteur accumulateur d'une valeur de 1 à la fin de la première période de huit secondes (ce qui le ramenait ainsi à 0 à la fin de la première période de huit secondes), de sorte qu'à l'instant t₂ (dix secondes) le compteur accumulateur renferme la valeur 2 ce qui correspond à une variation de tension ΔV/V de 2 X 0,3% = 0,6%. La courbe de gêne de la figure 2 indique un nombre de commutations par minute admissible de 300', ce qui est très nettement supérieur au nombre de commutations réellement effectuées, si bien que la suite du programme peut se dérouler normalement.

A l'instant t₃, c'est-à-dire huit secondes plus tard, (instant dix-huit secondes) se produisent deux événements simultanés, à savoir d'une part la fin de la période de chauffage du radiateur 1 et le début de la période de chauffage du radiateur 3, dont les poids respectifs sont 2 et 1, si bien que l'on ajoute au compteur accumulateur la différence de leurs poids c'est-à-dire la valeur 1. Le compteur accumulateur, compte tenu de la décrémentation effectuée lors de la fin de la seconde période de huit secondes, prend donc la valeur 2. Le contrôle effectué à la fin de celle-ci montre que la variation de tension ΔV/V est égale à la variation de tension à l'instant t₂. Le nombre de commutations admissibles maximal donné par la courbe de gêne est supérieur au nombre de commutations effectuées, si bien que la suite du programme peut se dérouler sans problèmes particuliers. La valeur du compteur accumulateur passe à 1 lors de la fin de la troisième période de huit secondes.

Dans la pratique, il est très improbable que deux commutations se produisent rigoureusement au même instant. Or cette possibilité permet de réaliser un gain important sur le nombre de commutations effectuées. C'est pourquoi on utilisera des moyens permettant de déclencher les commutations lorsque la tension passe par zéro, de façon qu'une commutation "en avance" attende une commutation légèrement "retardataire". On utilisera ainsi à cet effet des commutateurs à triacs qui présentent la possibilité de déclencher au zéro de tension.

Au temps t₄ le thermostat du radiateur 3 commande l'arrêt de celui-ci et le compteur accumulateur est donc incrémenté de 1 si bien qu'il passe ainsi à une valeur 2. A la fin de la quatrième période de huit secondes on se trouve donc dans la même situation qu'à la fin de la troisième période de huit secondes et le programme peut donc se poursuivre. La valeur du compteur accumulateur passe à 1 lors de la fin de la quatrième période de huit secondes.

Au temps t₅ le programmateur de la machine à laver 5 commande son chauffage. Or celle-ci possédant une puissance sept fois supérieure à celle du radiateur 3 le poids dont sa commutation est affectée est de 7, si bien que le nombre N stocké dans le compteur accumulateur passe à 8 ce qui correspond à une chute de tension de l'ordre de 8 X 0,3% = 2,4%. Le nombre de commutations autorisées correspondant est alors d'environ 1, de sorte que le système interdit toute autre commutation non prioritaire jusqu'à ce que la valeur N stockée dans le compteur accumulateur baisse à la suite du passage de périodes de huit secondes successives. Les commutations qui auraient dû normalement se produire aux instants t₆ et t₇ (et qui sont en pointillés sur les dessins de la figure 1) seront donc différées.

Bien entendu, si une demande de commutation prioritaire survenait, notamment dans le cas d'un délestage, le système laisserait celle-ci se réaliser.

On notera que, bien que le procédé et le dispositif suivant l'invention ne gèrent pas toutes les commutations prioritaires, ils prennent cependant en compte dans le relevé du nombre N des commutations effectuées, des commutations étrangères à la gestion, ainsi que mentionné précédemment.

Dans un mode de mise en oeuvre intéressant de l'invention on réalise un contrôle des commutations qui permet de réaliser celles-ci à un instant où les conséquences pour le réseau sont les plus amorties, à savoir l'instant du zéro de tension. On utilisera notamment pour effectuer de telles commutations des triacs qui commutent au zéro de tension. Bien entendu on pourra déterminer les instants adéquats pour effectuer de façon simultanée, au zéro de tension, plusieurs commutations afin d'obtenir un rapport ΔV/V moyen inférieur à la somme des valeurs absolues des ΔV/V de chacune d'elles.

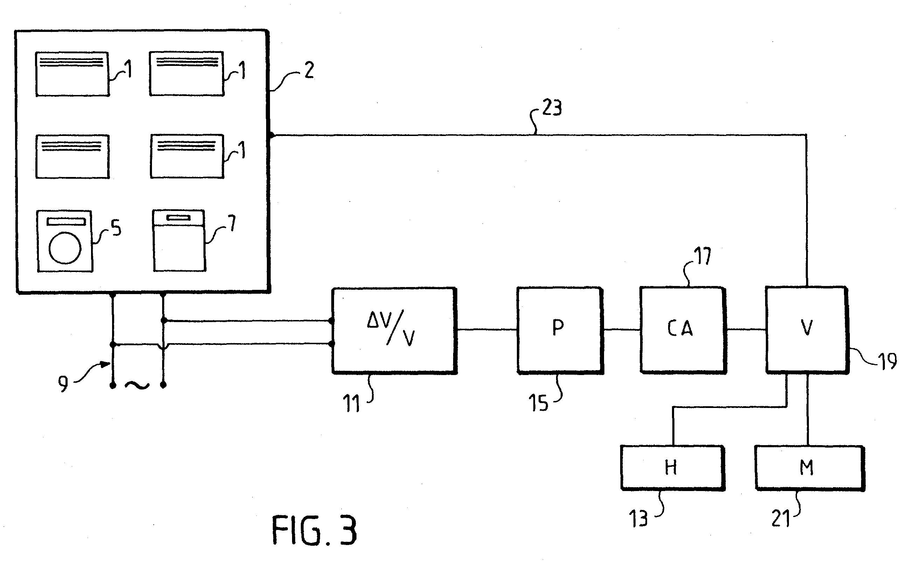

On a représenté sur la figure 3 un dispositif permettant de contrôler les commutations d'une installation électrique 2 constituée de quatre radiateurs électriques 1, d'une machine à laver 5 et d'un lave-vaisselle 7, qui sont alimentés par le réseau électrique 9. Ce dispositif comprend un circuit mesureur 11 relié au réseau électrique 9 de façon à mesurer toute variation relative de tension aux bornes de l'installation 2. Le circuit mesureur 11 est relié à un circuit pondérateur 15 qui, en fonction de la variation de tension relative ΔV/V, va attribuer un poids à celle-ci et incrémenter un compteur accumulateur 17. Ce dernier est réuni à un circuit de validation 19 qui est en liaison avec un circuit horloge 13 définissant, dans l'exemple particulier décrit, les périodes de huit secondes, et à une mémoire 21 dans laquelle sont stockées les valeurs définissant la courbe de gêne de la figure 2, et qui valide ou non la commutation sur une ligne 23 reliée à l'installation 2, suivant que la valeur N contenue dans le compteur accumulateur indique que l'on se trouve ou non sous la courbe de gêne.

Les commutations effectuées pourront être réalisées par exemple au moyens de triacs.

## Revendications

1. Procédé de gestion centralisée des commutations électriques d'une installation (2), caractérisé en ce qu'il comporte les étapes consistant à :
- détecter et mesurer les variations relatives de tension (ΔV/V) aux bornes de l'installation (2), provoquées par la mise en fonctionnement ou l'arrêt d'un appareil (1,5,7) de celle-ci,
- réaliser un comptage des commutations provoquant les différentes variations de tension et stocker le résultat de ce comptage dans un compteur accumulateur (17),
- comparer le résultat du comptage avec des valeurs préenregistrées établissant le nombre de commutations en fonction de la variation de tension aux bornes de l'installation,
- déterminer si on se trouve dans une zone de commutation autorisée, de façon à refuser une commutation non prioritaire si le nombre de commutations réalisées est égal ou supérieur au nombre de commutations admissibles, et autoriser cette commutation dans le cas inverse.

2. Procédé suivant la revendication 1 caractérisé en ce que l'on réalise une pondération des commutations qui est fonction de l'importance de la variation relative mesurée de la tension (ΔV/V), cette valeur pondérée étant stockée dans le compteur accumulateur (17).

3. Procédé suivant l'une quelconque des revendications précédentes caractérisé en ce que l'on cumule plusieurs commutations en réalisant celles-ci en zéro de tension.

4. Dispositif de gestion centralisée des commutations électriques d'une installation (2), caractérisé en ce qu'il comporte :
- des moyens (11) de détection et de mesure des variations relatives de tension aux bornes de l'installation (2) provoquées par la mise en fonctionnement ou l'arrêt d'un appareil (1,5,7) de celle-ci,
- des moyens de comptage et de stockage du nombre de commutations réalisées par l'installation (2), dans un compteur accumulateur (17),
- des moyens (21) de stockage du nombre maximal souhaité des commutations réalisées dans l'installation (2) en fonction des dites variations de tension,
- des moyens de comparaison (19) qui comparent le nombre des commutations réalisées à celui des commutations admissibles pendant ladite période donnée, de façon à refuser une commutation non prioritaire si le nombre de commutations réalisées est égal ou supérieur au nombre de commutations admissibles et autoriser cette commutation dans le cas inverse.

5. Dispositif suivant la revendication 4 caractérisé en ce qu'il comporte des moyens (15) permettant de pondérer les variations de tension relatives mesurées aux bornes de l'installation (2) et de stocker, dans les moyens de stockage (17), le résultat de cette pondération.

6. Dispositif suivant l'une des revendications 4 ou 5 caractérisé en ce qu'il comporte des moyens propres à assurer une ou plusieurs commutations simultanément au zéro de tension.

7. Dispositif suivant la revendication 6 caractérisé en ce que les moyens de commutation sont constitués d'un triac.

## Patentansprüche

1. Verfahren zur zentralen Steuerung elektrischer Schaltvorgänge einer Anlage (2), gekennzeichnet durch folgende Verfahrensschritte:
- Erfassen und Messen der relativen Spannungsänderungen (ΔV/V) an den Anschlüssen der Anlage (2), wie sie durch die Inbetriebnahme oder das Abschalten eines zu dieser Anlage gehörenden Geräts (1,5,7) verursacht werden,
- Durchführen einer Zählung der Schaltvorgänge, die die verschiedenen Spannungsänderungen hervorrufen, und Speichern des Ergebnisses dieser Zählung in einem Speicherzähler (17),
- Vergleichen des Ergebnisses der Zählung mit bereits gespeicherten Werten, woraus sich die Anzahl der Schaltvorgänge in Abhängigkeit von der Spannungsänderung an den Anschlüssen der Anlage ergibt,
- Bestimmen, ob man sich in einer zulässigen Schaltzone befindet, um einen nicht-vorrangigen Schaltvorgang zurückzuweisen, wenn die Anzahl der durchgeführten Schaltvorgänge größer oder gleich der Anzahl der zulässigen Schaltvorgänge ist, bzw. im umgekehrten Fall diesen Schaltvorgang zuzulassen.

2. Verfahren nach Anspruch 1, dadurch gekennzeichnet, daß eine Wichtung der Schaltvorgänge in Abhängigkeit von der Wichtigkeit der relativen gemessenen Änderung der Spannung (ΔV/V) erfolgt, wobei dieser gewichtete Wert dann im Speicherzähler (17) gespeichert wird.

3. Verfahren nach einem der voranstehenden Ansprüche, dadurch gekennzeichnet, daß mehrere Kommutationen kumuliert werden, indem diese am Spannungs-Nullpunkt festgestellt werden.

4. Vorrichtung zur zentralen Steuerung von elektrischen Schaltvorgängen einer Anlage (2), gekennzeichnet durch:
- Vorrichtungen (11) zum Erfassen und zum Messen relativer Spannungsänderungen an den Anschlüssen der Anlage (2), wie sie durch die Inbetriebnahme oder das Abschalten eines zu dieser Anlage gehörenden Geräts (1, 5, 7) verursacht werden,
- Vorrichtungen zum Zählen und Speichern der von der Anlage (2) durchgeführten Anzahl von Schaltvorgängen, in einem Speicherzähler (17),
- Vorrichtungen (21) zum Speichern der maximalen gewünschten Anzahl von Schaltvorgängen, die in der Anlage (2) durchgeführt werden, in Abhängigkeit von den genannten Spannungsänderungen,
- Vergleichsvorrichtungen (19), die die Anzahl der durchgeführten Schaltvorgänge mit derjenigen der während dieser gegebenen Periode zulässigen Schaltvorgänge vergleicht, um einen nicht-vorrangigen Schaltvorgang zurückzuweisen, wenn die Anzahl der durchgeführten Schaltvorgänge größer oder gleich der Anzahl der zulässigen Schaltvorgänge ist, und um diesen im umgekehrten Fall zuzulassen.

5. Vorrichtung nach Anspruch 4, dadurch gekennzeichnet, daß sie Vorrichtungen (15) umfaßt, die eine Wichtung der an den Anschlüssen der Anlage (2) gemessenen relativen Spannungsänderungen sowie eine Speicherung des Ergebnisses dieser Wichtung in den Speichervorrichtungen (17) ermöglichen.

6. Vorrichtung nach einem der Ansprüche 4 oder 5, dadurch gekennzeichnet, daß sie geeignete Vorrichtungen umfaßt, um einen oder mehrere Kommutationen gleichzeitig am Spannungs-Nullpunkt zu gewährleisten.

7. Vorrichtung nach Anspruch 6, dadurch gekennzeichnet, daß die Schaltvorrichtungen durch ein Triac gebildet sind.

## Claims

1. Method of centralized management of the electric commutations of an installation (2), characterized in that it comprises the steps consisting in:
- detecting and measuring the relative variations in voltage (Δ V/V) at the terminals of the installation (2), provoked by the starting up or stopping of an apparatus (1, 5, 7) thereof,
- counting the commutations provoking the different variations in voltage and storing the result of such counting in a meter-accumulator (17),
- comparing the result of counting with pre-recorded values establishing the number of commutations as a function of the variation in voltage at the terminals of the installation,
- determining whether one is in an authorized zone of commutation, so as to refuse a non-priority commutation if the number of commutations made is equal to or greater than the number of commutations admissible, and to allow such commutation in the opposite case.

2. Method according to Claim 1, characterized in that a weighting of the commutations is effected, which is a function of the magnitude of the measured relative variation of the voltage (Δ V/V), this weighted value being stored in the meter-accumulator (17).

3. Method according to either one of the preceding Claims, characterized in that several commutations are cumulated, being effected at zero voltage.

4. Device for the centralized management of the electric commutations of an installation (2), characterized in that it comprises:
- means (11) for detecting and measuring the relative variations in voltage at the terminals of the installation (2) provoked by the starting up or stopping of an apparatus (1, 5, 7) thereof,
- means for counting and storing the number of commutations made by the installation (2), in a meter-accumulator (17),
- means (21) for storing the desired maximum number of the commutations made in the installation (2) as a function of said variations in voltage,
- comparison means (19) which compare the number of commutations made with that of the commutations admissible during said given period, so as to refuse a non-priority commutation if the number of commutations made is equal to or greater than the number of commutations admissible, and to allow such commutation in the opposite case.

5. Device according to Claim 4, characterized in that it comprises means (15) for weighting the relative voltage variations measured at the terminals of the installation (2) and for storing, in the storage means (17), the result of such weighting.

6. Device according to one of Claims 4 or 5, characterized in that it comprises means ensuring one or more commutations simultaneously at zero voltage.

7. Device according to Claim 6, characterized in that the commutation means are constituted by a triac.
